# EUROPÄISCHE PATENTSCHRIFT

(11) **EP 1 229 364 B1**
(45) Veröffentlichungstag und Bekanntmachung des Hinweises auf die Patenterteilung: **05.01.2005**
(21) Anmeldenummer: 01125879.5
(22) Anmeldetag: 30.10.2001
(51) Int. Cl.: G02B 6/36, G02B 6/38

(54) **Trägergehäuse für einen Lichtwellenleiter**
Mounting case for lightguide
Boîtier de support pour guide d'ondes optiques

(30) Priorität: 05.02.2001 DE 10105070
(43) Veröffentlichungstag der Anmeldung: 07.08.2002
(73) Patentinhaber: Tyco Electronics AMP GmbH, 64625 Bensheim (DE)
(72) Erfinder: Kraus, Roland, Evora (PT); Lannoje, Marnix, 67346 Speyer (DE); Loeffelholz, Stefan, 64653 Lorsch (DE)
(74) Vertreter: Grünecker, Kinkeldey, Stockmair & Schwanhäusser Anwaltssozietät

(56) Entgegenhaltungen:
- EP-A- 0 290 188
- EP-A- 0 431 768
- US-A- 4 735 477
- US-A- 5 133 033
- US-A- 5 717 813

## Beschreibung

Die vorliegende Erfindung bezieht sich auf ein Trägergehäuse für die Aufnahme eines Lichtwellenleiters nach dem Oberbegriff des Patentanspruchs 1.

In komplexen Datenbusübertragungssystemen, beispielsweise in Kommunikations- und Informationsnetzen werden Kunststofflichtwellenleiter zunehmend für den Datentransfer eingesetzt. Solche Systeme sichern hohe Übertragungsraten, ermöglichen eine störungsfreie Signalübertragung, sind gegenüber elektromagnetischen Störeinflüssen unempfindlich, reduzieren darüber hinaus den Verkabelungsaufwand und sparen Kosten und Gewicht. Ein mögliches Einsatzgebiet für einen solchen optischen Bus ist die Verbindung der Kommunikationskomponenten in einem Kraftfahrzeug. So werden beispielsweise Audiokomponenten, CD-Wechsler, Sprachbediensystem, eingebautes Autotelefon und weitere Elemente über einen Lichtleiterring miteinander verbunden. Auf diesem Lichtleiterring lassen sich synchrone oder asynchrone Datenübertragungen mit ausreichend hoher Baudrate realisieren.

Die Kopplung der Lichtwellenleiter mit den einzelnen elektronischen Komponenten oder die Kopplung mehrerer Lichtwellenleiter miteinander erfolgt über spezielle Trägergehäuse, in denen ein Lichtwellenleiter mit einem anderen Lichtwellenleiter oder einem optischen Bauelement verbunden wird.

Insbesondere im Bereich der Kraftfahrzeugelektronik muss der Anschluss der Lichtwellenleiter aufgrund der extrem rauhen Umweltbedingungen bezüglich der Vibrationsfestigkeit und Korrosionsbeständigkeit, aber auch der Temperaturbeständigkeit hohen Anforderungen genügen. Darüber hinaus muss die Ankopplung der Lichtwellenleiter kostengünstig und möglichst weitgehend automatisiert erfolgen können.

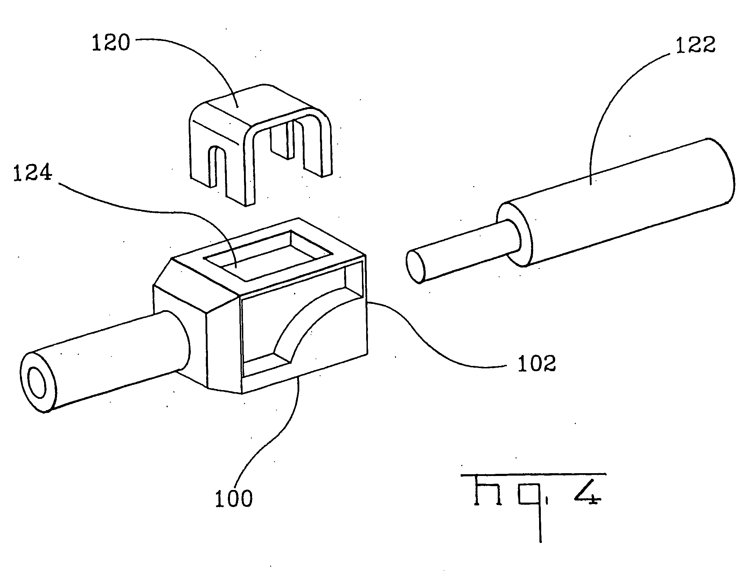

Ein übliches Verfahren zur Fixierung eines Lichtwellenleiters in einem Trägergehäuse ist die Verwendung von Metallclips, wie in Fig. 4 dargestellt. Das Trägergehäuse weist hier eine Aufnahme 102 für den Lichtwellenleiter 122 und eine Aufnahme für einen Metallclip 120 auf. Der Lichtwellenleiter 122 wird in dem Trägergehäuse 100 positioniert und durch Einschieben des Metallclips 120 mechanisch gegen axiale Verschiebung gesichert. Diese Technik ermöglicht ein Montieren und Verrasten von Lichtwellenleitern unterschiedlicher Länge. Der Lichtleiter wird über einen Metallclip in dem Trägergehäuse fixiert und sichert so die Verbindung zu einem weiteren Lichtwellenleiter. Diese Lösung hat jedoch den Nachteil, dass bei der Montage immer ein zusätzliches Metallteil positioniert werden muss. Dies verteuert den Montagevorgang.

Eine weitere Möglichkeit, Lichtwellenleiter an einem Trägergehäuse zu befestigen, ist die stoffschlüssige Verbindung zwischen Lichtwellenleiter und Trägergehäuse mit Hilfe eines Laserschweißpunktes. Jedoch ist der gerätetechnische Aufwand dieser Befestigungsvariante erheblich und die einmal geschlossene Verbindung zwischen Lichtwellenleiter und Trägergehäuse ist nicht mehr lösbar.

Aus der US 5,133,033 ist ein mechanischer Verbinder für Lichtleitfasern bekannt, der Klemmelemente und ein elastisches Federelement aufweist. Die Lichtleitfaser wird in einen Kanal eingeführt, der in einem spritzgegossenen Plastikteil vorgesehen ist. Die Klemmvorrichtung ist in einer Richtung quer zur Längsachse der optischen Faser beweglich und wird mit Hilfe des Federelements gegen die optische Faser gepresst.

Die EP 0 290 188 A2 zeigt einen Verbinder für Lichtleitfasern mit einem Gehäuse, das eine Grundplatte und drei Deckelteile aufweist, wobei die drei Deckelteile über Schamiere mit der Grundplatte verbunden sind und im montierten Zustand mit ihr verriegelt werden können. Die Lichtleitfaser wird in einem V-förmigen Graben der Grundplatte eingelegt und wird durch den Druck der Deckelteile mechanisch fixiert.

Die Aufgabe der vorliegenden Erfindung ist es, ein Trägergehäuse für die Verbindung eines Lichtwellenleiters mit einem optischen Element zur Verfügung zu stellen, das eine möglichst einfache und kostengünstige Befestigung der Lichtwellenleiter erlaubt.

Diese Aufgabe wird von einem Trägergehäuse mit den Merkmalen des Patentanspruchs 1 gelöst. Die Unteransprüche beschreiben bevorzugte Ausführungsformen der Erfindung.

Ein wesentliches Merkmal des erfindungsgemäßen Trägergehäuses für die Verbindung eines Lichtwellenleiters mit einem optischen Element besteht darin, dass der Haltekörper aus dem gleichen Material wie das Trägergehäuse besteht. Dadurch kann die Herstellung von Haltekörper und Trägergehäuse in ein und demselben Arbeitsschritt erfolgen, was die Produktionskosten verringert.

Gemäß einer bevorzugten Ausführungsform ist der Haltekörper einstückig mit dem Trägergehäuse und dem Haltekörper ausgeführt. Es sind Haltestege vorgesehen, die einerseits den Haltekörper im vormontierten Zustand vor dem Herausfallen und Verlorengehen schützen, andererseits bei der Montage bereits durch Anwendung geringer Druckkräfte gebrochen werden können und dadurch den Haltekörper verschieblich machen.

Versieht man die mit dem Lichtwellenleiter in Anlage befindliche Oberfläche mit einer Zahnung, so hat dies den Vorteil, dass der Lichtwellenleiter besonders effektiv gegen eine unbeabsichtigte axiale Verschiebung geschützt ist. Darüber hinaus erniedrigt diese Realisierung die zur Montage des Haltekörpers benötigten Druckkräfte.

Gemäß einer weiteren vorteilhaften Ausgestaltung weist der Haltekörper eine Aufnahme für einen Druckstempel eines Montagewerkzeugs auf. Dadurch wird die Positionierung des Montagewerkzeugs erleichtert und die Montage vereinfacht.

Sieht man an dem Trägergehäuse Ausnehmungen und Führungsvorsprünge vor, entlang derer der Haltekörper verschiebbar ist, so kann sichergestellt werden, dass der Haltekörper immer exakt senkrecht zur Einführrichtung des Lichtwellenleiters verschoben wird.

Um den Haltekörper im montierten Zustand gegen eine unbeabsichtigte Verschiebung zu sichern, können die Führungsvorsprünge so abgeschrägt sein, dass sie den Haltekörper im montierten Zustand durch Klemmung fixieren. Dies bietet einerseits den Vorteil eines sicheren Anschlags bei der Montage und erlaubt andererseits, die auf den Lichtwellenleiter wirkenden Kräfte so gering als möglich zu halten.

Anhand der in den beiliegenden Zeichnungen dargestellten bevorzugten Ausgestaltungen wird die Erfindung im folgenden näher erläutert. Es zeigen:
Fig. 1 eine perspektivische Ansicht von oben auf ein Trägergehäuses für die Verbindung eines Lichtwellenleiters mit einem optischen Element gemäß einer ersten bevorzugten Ausführungsform;
Fig. 2 eine Ansicht von unten auf das in Fig. 1 dargestellte Trägergehäuse;
Fig. 3 ein Trägergehäuse zur Verbindung zweier Lichtwellenleiter mit optischen Elementen gemäß einer zweiten bevorzugten Ausführungsform;
Fig. 4 eine perspektivische Darstellung eines herkömmlichen Trägergehäuses mit Metallclipbefestigung des Lichtwellenleiters.

Im folgenden werden bevorzugte Ausgestaltungen der Erfindung näher beschrieben. Ähnliche oder korrespondierende Einzelheiten des erfindungsgemäßen Gegenstandes sind in den Figuren mit denselben Bezugszeichen versehen.
In den Zeichnungen sind lediglich die aus einem Spritzgussmaterial, beispielsweise Kunststoff hergestellten Elemente des Trägergehäuses dargestellt. Der Lichtwellenleiter, der einen kreisförmigen Querschnitt aufweist, und vorzugsweise aus Kunststoff gefertigt ist, ist in den Zeichnungen nicht dargestellt und wird daher auch nicht näher beschrieben. Ebenso sind die optischen Elemente, an welche der Lichtwellenleiter mit Hilfe des Trägergehäuses angekoppelt werden soll, zur Wahrung der Übersichtlichkeit nicht in den Zeichnungen dargestellt. Solche optischen Elemente können beispielsweise weitere Lichtleitfasern oder eine Diode sein.

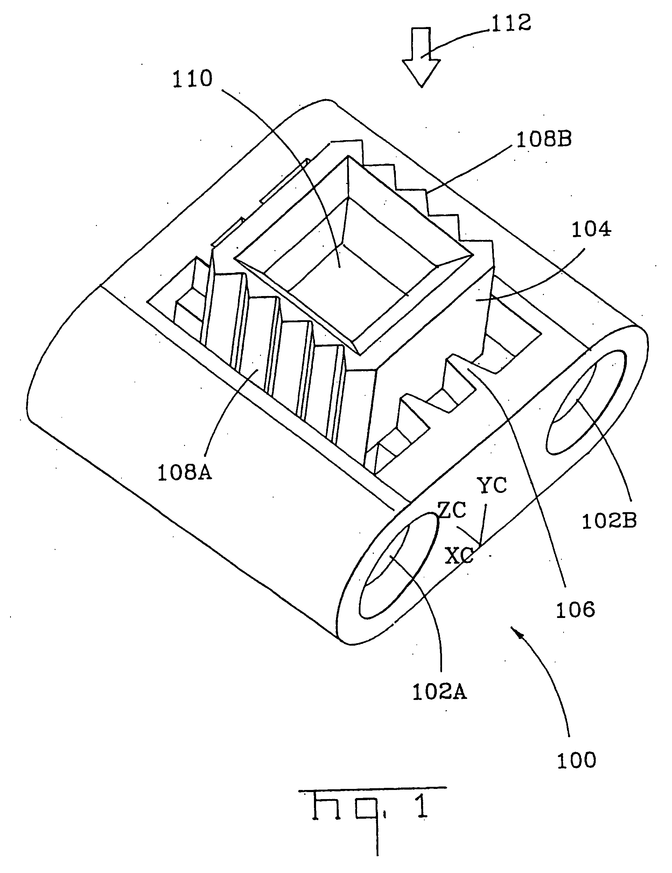

Wie in Fig. 1 in einer ersten Ausführungsform dargestellt, weist das erfindungsgemäße Trägergehäuse 100 zwei im wesentlichen rohrförmige Aufnahmen 102A, 102B für die Aufnahme der Lichtwellenleiter auf. Ein Haltekörper 104, der aus demselben Material wie der Rest des Trägergehäuses besteht, ist hier im vormontierten Zustand dargestellt.

Haltestege 106, die einstückig mit dem Haltekörper und dem Trägergehäuse hergestellt sind, fixieren den Haltekörper 104 in einer Position, in der er nicht in die Einführöffnungen 102A und 102B hineinragt. In dieser Stellung können die Lichtleitfasern daher ohne Kraftaufwand in die Einführöffnungen 102A, 102B eingeschoben werden.

Sind die Lichtwellenleiter korrekt positioniert, was beispielsweise über eine Führung und einen Anschlag im Inneren des Trägergehäuses sichergestellt werden kann, wird über einen Druckstempel eines Montagewerkzeugs, der in die Aufnahmeöffnung 110 positioniert wird, ein ausreichend hoher Anpressdruck in Richtung des Pfeils 112 ausgeübt, so dass die Haltestege 106 gebrochen werden, und der Haltekörper 104 senkrecht zur Einführrichtung der Lichtwellenleiter in den Einführbereich 102A, 102B hineingeschoben wird und mit den gezahnten Oberflächen 108A, 108B die Lichtwellenleiter durch Klemmung fixiert.

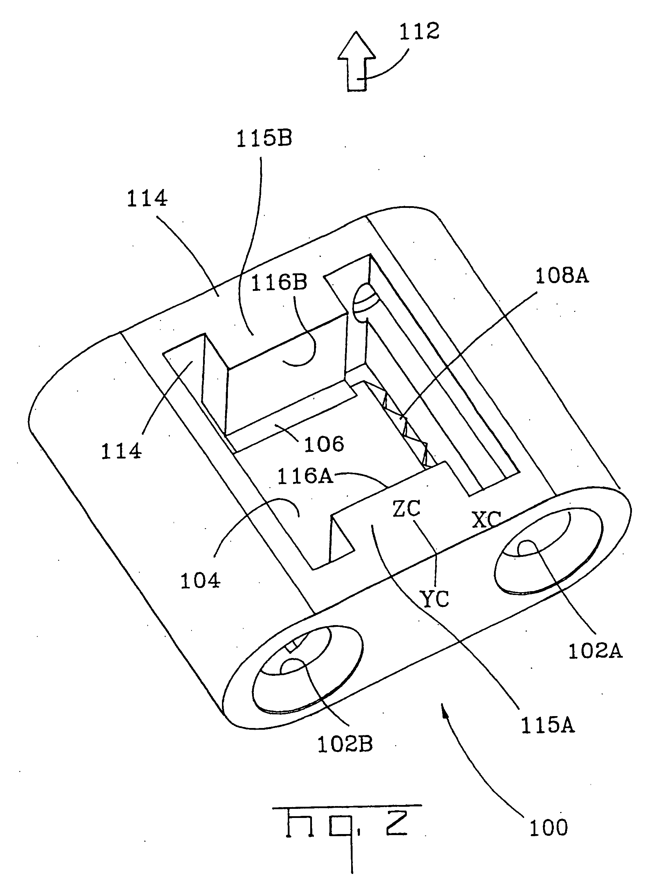

In Fig. 2 ist das in Fig. 1 dargestellte Trägergehäuse 100 einer Ansicht von unten dargestellt. Man erkennt die rohrförmige Aufnahme 102A, 102B für die Lichtwellenleiter, die im Bereich der gezahnten Anlageflächen 108A, 108B des Haltekörpers 104 offen sind, so dass die Lichtwellenleiter nach dem Herunterdrücken des Haltekörpers 104 festgeklemmt sind.

Der Haltesteg 106, der in einem Spritzgussvorgang mit dem Haltekörper 104 und dem Trägergehäuse 100 hergestellt wird, muss so dimensioniert werden, dass er einerseits einen sicheren Halt des Haltekörpers 104 im vormontierten Zustand gewährleistet, andererseits ermöglicht, dass der Haltekörper 104 mit möglichst geringer Andruckkraft in Richtung 112 bewegt werden kann. Führungsvorsprünge 115A, 115B gewährleisten, dass sich der Haltekörper 104 bei Andruck durch ein Montagewerkzeug exakt in Richtung 112 senkrecht zu dem Lichtwellenleiter verschiebt. Als Anschlag, der verhindert, dass der Haltekörper 104 zu weit in Richtung 112 gedrückt wird, kann eine hier nicht dargestellte Grundfläche des Montagewerkzeugs dienen, auf der die Auflagefläche 114 durchgehend aufliegt. Es können aber auch die Seitenflächen 116A und 116B der Führungsvorsprünge 115 so abgeschrägt sein, dass der Haltekörper sich mit zunehmender Verschiebung in Richtung 112 festklemmt.

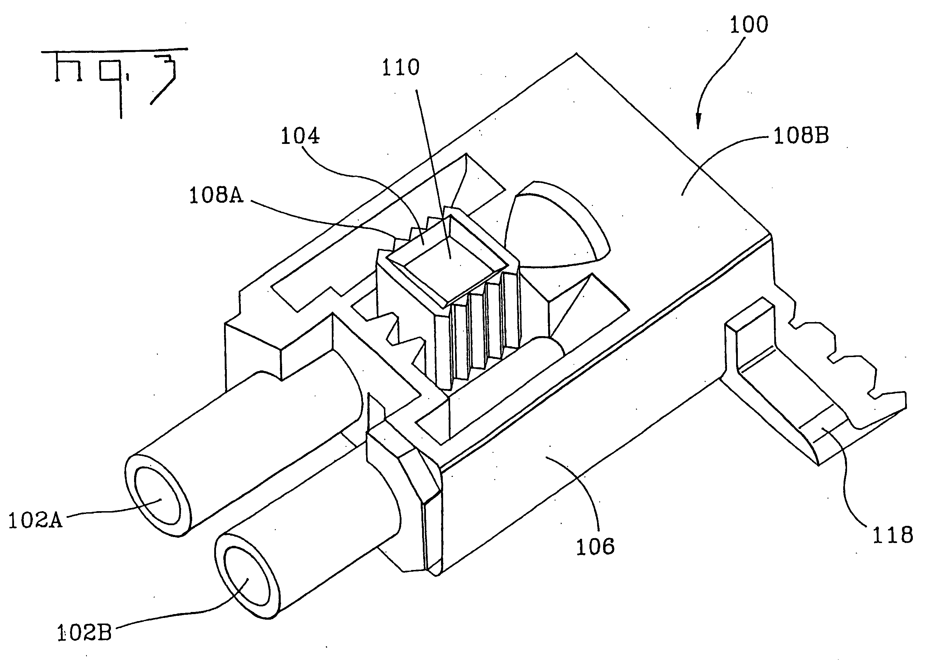

Figur 3 zeigt ein Trägergehäuse für die Verbindung zweier Lichtwellenleiter mit einem optischen Bauelement, das Dioden enthält, gemäß einer zweiten bevorzugten Ausführungsform. Die Aufnahmen 102A, 102B für die Lichtwellenleiter sind als rohrförmige Einführhilfen nach außen fortgesetzt. An der diesen Aufnahmen 102 gegenüberliegenden Seite des Trägergehäuses 100 befindet sich eine Halterung 118 für die Aufnahme des optischen Bauteils (nicht dargestellt). Auch bei dieser Ausführungsform ist der Haltekörper 104 über einstückig angespritzte Haltestege 106 im vormontierten Zustand an dem Trägergehäuse 100 angelagert. An den Oberflächen 108A, 108B, die mit den Lichtwellenleitern in Anlage kommen, befindet sich eine Zahnung. Eine Aufnahmeöffnung 110 für ein Montagewerkzeug ermöglicht das exakte Positionieren eines Druckstempels, der den Haltekörper 104 zur Fixierung der beiden Lichtwellenleiter in die Aufnahmeöffnungen 102A und 102B hineindrückt.

Das erfindungsgemäße Trägergehäuse könnte auch Teil einer "fliegenden" Kupplung zur Verbindung mehrerer Lichtwellenleiterenden untereinander sein.

## Patentansprüche

1. Trägergehäuse für die Aufnahme eines Lichtwellenleiters, wobei das Trägergehäuse (100) eine Aufnahme (102A, 102B) für den Lichtwellenleiter und einen Haltekörper (104), der formschlüssig in dem Trägergehäuse (100) aufgenommen wird und senkrecht zur Einführrichtung des Lichtwellenleiters bewegbar ist, aufweist, und wobei der Haltekörper (104) im vormontierten Zustand einstückig mit dem Trägergehäuse (100) ausgeführt ist und laus dem gleichen Material wie das Trägergehäuse (100) besteht und **dadurch gekennzeichnet, dass** der Haltekörper im vormontierten Zustand über einstückig ausgebildete Haltestege (106) an dem Trägergehäuse (100) angelagert ist, wobei die Haltestege derartig ausgebildet sind dass sie durch Anwendung eines Anpressdrucks gebrochen werden können
wobei das Trägergehäuse (100) Führungsvorsprünge (115) aufweist, entlang derer der Haltekörper in den fertig montierten Zustand (104) verschiebbar ist.

2. Trägergehäuse nach Anspruch 1, **dadurch gekennzeichnet, dass** der Haltekörper (104) an der mit dem Lichtwellenleiter in Anlage befindlichen Oberfläche (108A, 108B) eine Zahnung aufweist.

3. Trägergehäuse nach einem der Ansprüche 1 oder 2, **dadurch gekennzeichnet, dass** der Haltekörper (104) eine Aufnahme (110) für einen Druckstempel eines Montagewerkzeugs aufweist.

4. Trägergehäuse nach einem der Ansprüche 1 bis 3, **dadurch gekennzeichnet, dass** die Führungsvorsprünge (115) so abgeschrägt sind, dass der Haltekörper (104) im montierten Zustand durch Klemmung fixiert ist.

5. Trägergehäuse nach einem der Ansprüche 1 bis 4, **dadurch gekennzeichnet, dass** an die Aufnahme (102A, 102B) als Verlängerung eine rohrförmige Einführhilfe angeformt ist.

6. Trägergehäuse nach einem der Ansprüche 1 bis 5, **dadurch gekennzeichnet, dass** das Trägergehäuse zwei Aufnahmen (102A, 102B) aufweist, in die zwei Lichtwellenleiter im wesentlichen parallel zueinander einschiebbar sind und die Lichtwellenleiter durch denselben Haltekörper (104) fixierbar sind.

7. Montageverfahren zur Montage mindestens eines Lichtwellenleiters an einem Trägergehäuse (100) mit den folgenden Schritten:
Einführen des mindestens einen Lichtwellenleiters in eine Aufnahme (102A, 102B) des Trägergehäuses (100);
Verschieben eines Haltekörpers (104), der im vormontierten Zustand einstückig mit dem Trägergehäuse (100) ausgeführt ist und aus dem gleichen Material wie das Trägergehäuse (100) besteht, von einer vormontierten Stellung, in welcher der Haltekörper (104) über einstückig ausgebildete Haltestege (106) an dem Trägergehäuse (100) angelagert ist, in eine fertig montierte Stellung, in welcher der Haltekörper (104) den mindestens einen Lichtwellenleiter mechanisch an dem Trägergehäuse (100) fixiert;
wobei die Haltestege (106) durch das Verschieben des Haltekörpers (104) gebrochen werden und das Trägergehäuse (100) Führungsvorsprünge (115) aufweist, entlang derer der Haltekörper (104) senkrecht zur Einführrichtung des Lichtwellenleiters in den fertig montierten Zustand verschoben wird.

## Claims

1. A support housing for accommodating an optical waveguide, the support housing (100) comprising a receptacle (102A, 102B) for the optical waveguide and a retainer (104), which is accommodated form-fittingly in the support housing (100) and may be moved perpendicularly to the direction of insertion of the optical waveguide, and the retainer (104) being in one piece with the support housing (100) in the pre-assembled state and consisting of the same material as the support housing (100),
**characterised in that**,
in the preassembled state, the retainer is attached to the support housing (100) via retaining webs (106) of one-piece construction, wherein the retaining webs are so constructed that they may be broken by the application of contact pressure,
wherein the support housing (100) comprises guide projections (115), along which the retainer may be displaced into the fully assembled state (104).

2. A support housing according to claim 1, **characterised in that** the retainer (104) comprises teeth on the surface (108A, 108B) adjacent the optical waveguide.

3. A support housing according to either one of claims 1 or 2, **characterised in that** the retainer (104) comprises a receptacle (110) for the pressure punch of an assembly tool.

4. A support housing according to any one of claims 1 to 3, **characterised in that** the guide projections (115) are bevelled in such a way that the retainer (10) is fixed in the assembled state by clamping.

5. A support housing according to any one of claims 1 to 4, **characterised in that** a tubular insertion aid is formed as an extension on the receptacle (102A, 102B).

6. A support housing according to any one of claims 1 to 5, **characterised in that** the support housing comprises two receptacles (102A, 102B), into which two optical waveguides may be inserted substantially parallel to one another and the optical waveguides may be fixed by the same retainer (104).

7. An assembly method for mounting at least one optical waveguide on a support housing (100), comprising the following steps:
insertion of the at least one optical waveguide into a receptacle (102A, 102B) of the support housing (100);
displacement of a retainer (104), which in the preassembled state is in one-piece with the support housing (100) and consists of the same material as the support housing (100), from a preassembled position, in which the retainer (104) is attached to the support housing (100) via retaining webs (106) of one-piece construction, into a fully assembled position, in which the retainer (104) fixes the at least one optical waveguide mechanically to the support housing (100);
wherein the retaining webs (106) are broken by the displacement of the retainer (104) and the support housing (100) comprises guide projections (115), along which the retainer (104) is displaced perpendicularly to the direction of insertion of the optical waveguide into the fully assembled state.

## Revendications

1. Boîtier de support servant à recevoir un guide d'ondes optiques, le boîtier de support (100) comportant un logement de réception (102A, 102B) pour le guide d'ondes optiques et un corps de retenue (104) reçu par ajustement dans le boîtier de support (100) et pouvant être déplacé de manière perpendiculaire à la direction d'insertion du guide d'ondes optiques, le corps de retenue (104) étant formé dans l'état prémonté d'une seule pièce avec le boîtier de support (100) et étant composé du même matériau que le boîtier de support (100),
**caractérisé en ce que**
le corps de retenue est fixé dans l'état prémonté par des traverses de retenue formées d'une seule pièce sur le boîtier de support (100), les traverses de retenue étant configurées de sorte à pouvoir être cassées par suite de l'application d'une pression de pressage,
le boîtier de support (100) comportant des saillies de guidage (115), le long desquelles le corps de retenue peut être déplacé dans l'état entièrement monté (104).

2. Boîtier de support selon la revendication 1, **caractérisé en ce que** le corps de retenue (104) comporte une denture sur la surface (108A, 108B) en contact avec le guide d'ondes optiques.

3. Boîtier de support selon l'une des revendications 1 ou 2, **caractérisé en ce que** le corps de retenue (104) comporte un logement de réception (110) pour un poinçon de pression d'un outil de montage.

4. Boîtier de support selon l'une des revendications 1 à 3, **caractérisé en ce que** les saillies de guidage (115) sont biseautées de sorte que le corps de retenue (104) est fixé par serrage dans l'état monté.

5. Boîtier de support selon l'une des revendications 1 à 4, **caractérisé en ce que** le logement de réception (102A, 102B) a la forme d'un prolongement d'un moyen d'insertion tubulaire

6. Boîtier de support selon l'une des revendications 1 à 5, **caractérisé en ce que** le boîtier de support (102A, 102B) comporte deux logements de réception, dans lesquels deux guides d'ondes optiques peuvent être insérés de manière essentiellement parallèle, les guides d'ondes optiques pouvant être fixés par le même corps de retenue (104).

7. Procédé de montage pour le montage d'au moins un guide d'ondes optiques sur un boîtier de support (100), comprenant les étapes ci-dessous:
insertion du au moins un guide d'ondes optiques dans un logement de réception (102A, 102B) du boîtier de support (100);
déplacement d'un corps de retenue (104), formé à l'état prémonté d'une seule pièce avec le boîtier de support (100) et composé du même matériau que le boîtier de support (100), d'une position prémontée, dans laquelle le corps de retenue (104) est fixé sur le boîtier de support (100) par des traverses de retenue (106) formées d'une seule pièce, dans une position à montage complet, dans laquelle le corps de retenue (104) assure la fixation mécanique du au moins un guide d'ondes optiques sur le boîtier de support (100);
les traverses de retenue (106) étant cassées par le déplacement du corps de retenue (104) et le boîtier de support (100) comportant des saillies de guidage (115), le long desquelles le corps de retenue (104) peut être déplacé de manière perpendiculaire par rapport à la direction d'insertion du guide d'ondes optiques.
